# EUROPEAN PATENT APPLICATION

(11) **EP 0 543 548 A2**
(43) Date of publication of application: **26.05.1993**
(21) Application number: 92310247.9
(22) Date of filing: 10.11.1992
(51) Int. Cl.: B60B 33/00

(54) **Vibration resistant castor**

(30) Priority: 19.12.1991 AU 81/91; 19.11.1991 AU 9578/91
(71) Applicant: BRITAX CHILD-CARE PRODUCTS PTY. LTD., Melbourne, Victoria 3020 (AU)
(72) Inventor: Lumley, Michael Andrew, Torquay, Victoria 3228 (AU); Bidwell, Alan Leslie, Strathmore, Victoria 3041 (AU)
(74) Representative: Hollinghurst, Antony

(57) **Abstract**

A castor which has a transversely extending bearing surface (16) extending through the bearing boss (17) in which an axle (13) is journalled for rotation. The axle has two ends which project outwardly from the bearing boss (17). Each end carries one of a pair of wheels (12). Snubbing rings (25) which allow but hinder rotation of the wheels around the axle so that the wheels and axle tend to but are not constrained to rotate in unison, thus enabling the castor to traverse corners without the wheels skidding.

## Description

This invention relates to a castor comprising a mounting portion, a bearing boss, a vertical pintle retaining the bearing boss to the mounting portion for relative swivel movement about a central axis of the pintle, a transversely extending bearing surface extending through the bearing boss, an axle journalled for rotation in the bearing surface and having two ends projecting outwardly from the bearing boss, dual wheels mounted on respective ends of the axle and retention means retaining the wheels to the axis. Such castors are commonly used on small wheeled vehicles such as perambulators.

One of the problems which is encountered with castors at present used on perambulators is that they tend to vibrate (oscillate) while the vehicle is moving over the ground. Such vibration sometimes becomes excessive, causing the castor to swivel about its vertical pintle by as much as 90°, and this arrests the travel of the vehicle.

In many instances use is made of dual wheels rotatable about opposite ends of an axle and positioned symmetrically with respect to a pintle. However, dual wheels are particularly prone to vibration, and for this reason are not fully acceptable to the purchasing public. If there is a free differential wheel movement then oscillation or wheel vibration will occur which is sometimes worse than with a single wheel.

It is an object of this invention to provide a castor wherein the tendency to vibrate is reduced.

According to the invention, a castor of the type described above has rotation inhibiting means inhibiting relative rotation of the wheels and the axle so that the friction resisting rotation of each wheel in relation to the axle is greater than the friction resisting rotation of the axle relative to the bearing surface, with the result the wheels and axle tend to, but are not constrained to rotate in unison.

If the wheels are constrained to rotate in unison, vibration can occur only upon some skidding of a wheel on the ground, but this adds to the load of propelling the vehicle around a corner, because at least one the wheels has to skid over the ground. With this invention, the additional "skidding load" can be avoided, while at the same time vibration can be substantially reduced.

An embodiment is described hereunder in some detail with reference to and as illustrated in the accompanying drawings in which:
Figure 1 is a perspective view of a perambulator supported by at least two castors;
Figure 2 is a section take on plane 2-2-2-2 of Figure 1, showing a castor having rotation inhibiting means in accordance with the invention;
Figure 3 is a partly sectioned side view of Figure 2, taken on the line 3-3, Figure 3 also showing at line 2-2 the section plane of Figure 1;
Figure 4 is a section through the wheels of a castor having alternative rotation inhibiting means between the wheels and axle;
Figure 5 is a fragmentary section showing another alternative inhibiting means;
Figure 6 is a fragmentary end view of the embodiment shown in Figure 5,
Figure 7 is also a fragmentary section showing yet another alternative inhibiting means,
Figure 8 is an "exploded" perspective view illustrating a bifurcate projecting end and a spring 'C' ring used in a further alternative embodiment;
Figure 9 is a perspective view of a resilient fluted sleeve used in a still further alternative embodiment; and
Figure 10 is a fragmentary end view of the embodiment of Figure 9 showing the sleeve interposed between an axle and wheel hub.

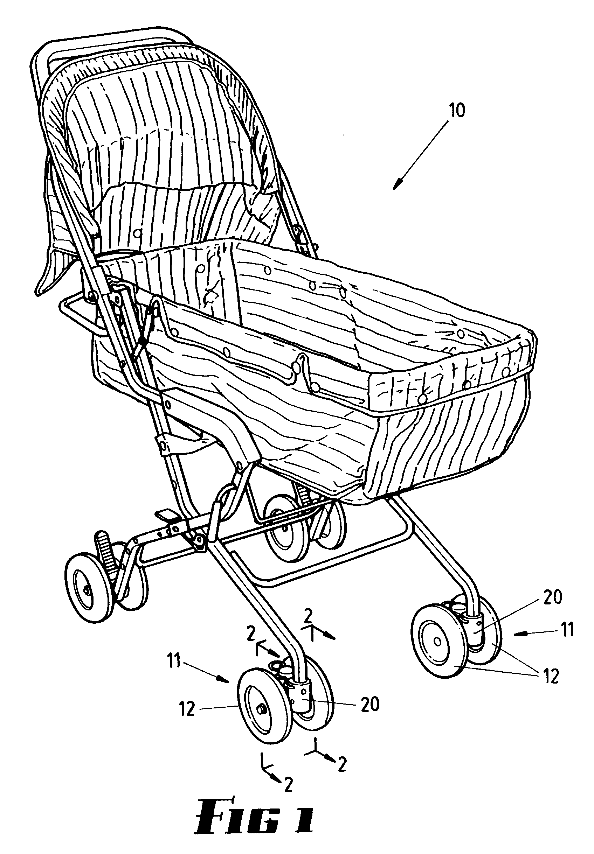

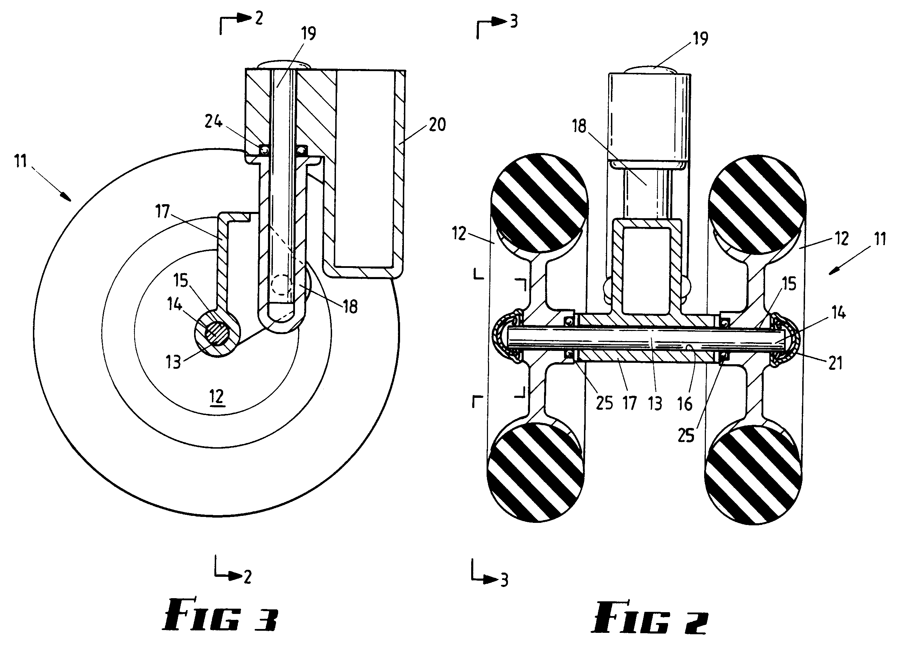

In the embodiment of Figures 1, 2 and 3, a perambulator 10 is supported by at least two dual wheel castors 11, each of which is separately shown in Figures 2 and 3, and each of which comprises two transversely spaced tyre wheels 12 carried on respective ends of an axle 13 and retained thereon by respective ratchet caps 21. The intermediate portion of the axle 13 has a circular cross-section and this is journalled within the bearing surface 16 of a bearing boss 17 which spaces the wheels apart. The bearing boss 17 contains a socket 18 which receives a vertical pintle 19 for the axle movement about the vertical axis of the pintle. The pintle 19 passes through a mounting portion 20 by which the castor is retained to the frame of the perambulator 10.

The wheels are not constrained to rotate in unison. Relative rotation between the wheels and axle is inhibited, but not prevented, by two snubbing rings 25 located between the respective wheels 12 and the boss 17 and frictionally engaging both the axle 13 and a circular bore of the wheel hub. A snubbing ring 24 of elastomeric material between the mounting portion 20 and the bearing block 17 inhibits angular movement of the castor about the pintle 19. Wave washers may be used in lieu of the illustrated resilient snubbing rings.

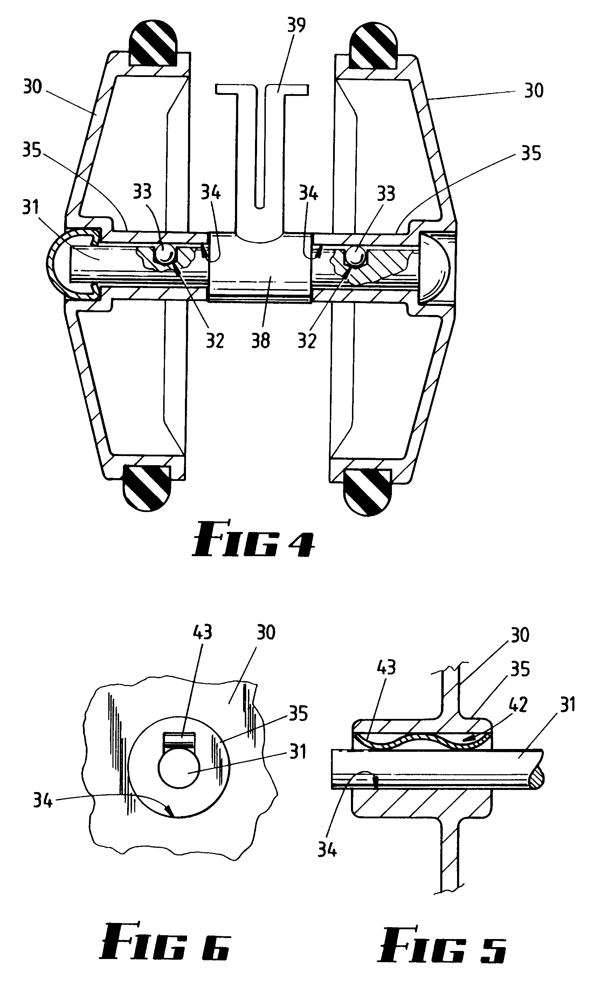

The preferred embodiment for snubbing relative rotation of the wheels is illustrated in Figure 4, wherein two wheels 30 are rotatable about the ends of axle 31, but axle 31 has two recesses 32, each containing a respective ball 33 which projects slightly beyond the outer surface of axle 31 and engages with the inner circular bore 34 of the wheel hub 35 with an interference fit. The balls 33 can be metal balls.

As in earlier embodiments axle 31 is freely rotatable within boss 38 which carries the pintle 39. It has been found that the interference balls 33 place a small degree of restraint (snubbing) between the axle 31 and the hubs 35 of the wheels 30 which varies surprisingly little over an extended period of usage. Thus upon a vehicle negotiating a turn, there is some relative movement but insufficient to noticeably add to the load of propelling the vehicle, although sufficient to inhibit vibration.

Obviously, however, other alternatives may be used. Figures 5 and 6 show a further embodiment wherein the hub 35 of the wheel 30 contains a slot 42 which accommodates a wave strip 43 of spring steel or other material and this wave strip imposes a nearly constant bearing pressure against the circular bore 34 of the hub 35.

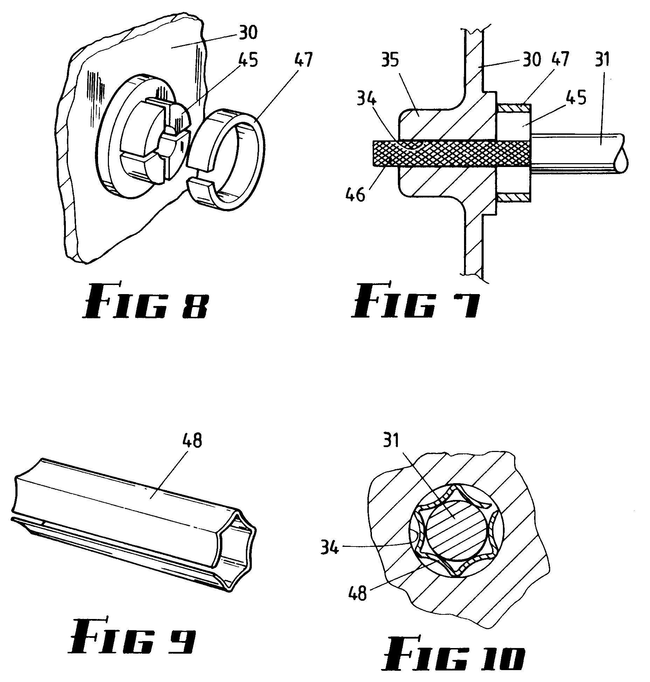

A still further alternative is illustrated in the embodiments of Figures 7 and 8 wherein the hub 35 of the wheel 30 has a bifurcate projecting end 45 which, in the illustrated embodiment, has four slots dividing the end 45 into four circumferentially spaced slots dividing the end 45 into four circumferentially spaced fingers and these are compressed by a spring 'C' ring 47 on to an end 46 of the axle 31, which may be, but is not necessarily, knurled. A knurled end establishes a plurality of convex projections which may be regarded as performing a function similar to the projecting part of ball 33, but to a much greater extent, and the knurling can lock a wheel to the axle.

Finally, an embodiment is illustrated in Figures 9 and 10 wherein the circular bore 34 of the hub of a wheel contains a fluted sleeve 48 of material which forms a satisfactory bearing surface, and yet which is resilient. The fluted sleeve 48 can engage the circular bore 34 with an interference fit and will thereby apply pressure through deformation of the flutes of the sleeve against the surface of axle 31. One suitable material is nylon, although use can also be made of metal.

## Claims

1. A castor comprising a mounting portion (18), a bearing boss (17), a vertical pintle (19) retaining the bearing boss (17) to the mounting portion (20) for relative swivel movement about a central axis of the pintle (19), a transversely extending bearing surface (16) extending through the bearing boss (17), an axle (13) journalled for rotation in the bearing surface (16) and having two ends projecting outwardly from the bearing boss (17), dual wheels (30) mounted on respective ends of the axle (13) and retention means retaining the wheels (30) to the axis, characterised by rotation inhibiting means (25, 33, 43, 46, 47, 48) inhibiting relative rotation of the wheels (30) and the axle (13) so that the friction resisting rotation of each wheel (30) in relation to the axle (13) is greater than the friction resisting rotation of the axle (13) relative to the bearing surface (16), with the result the wheels (30) and axle (13) tend to, but are not constrained to rotate in unison.

2. A castor according to claim 1, wherein the cross-sectional size and shape of said axle (13) is constant and circular throughout its length, and said inhibiting means comprises elastomeric snubbing rings (25) between the axle (13) and wheels (30).

3. A castor according to claim 1, wherein said rotation inhibiting means comprise balls (33) each contained within a respective recess (32) near a corresponding end of the axle (13), each ball (33) projecting outwardly from a surface of the axle (13) to be in interference engagement with a respective wheel (30).

4. A castor according to claim 1, wherein said rotation inhibiting means comprises an axially extending slot (42) in the bore of a hub (35) of a wheel (30), and a wave strip (43) of resilient material which bears both against a surface of the slot (42) and against the axle (13) and imparts bearing pressure between the bore and the axle (13).

5. A castor according to claim 1, wherein said rotation inhibiting means comprises a knurled formation (46) on an end of the axle (13), the corresponding wheel (30) being in interference engagement with said knurled formation (46).

6. A castor according to claim 1, wherein each wheel (30) has a hub (35) containing a bore which engages on an end of the axle, and each hub (35) has a bifurcate projecting end (45) surrounded by a resilient 'C' ring (47) which imparts bearing pressure between the bore and the axle (31).

7. A castor according to claim 1, wherein each wheel (30) has a bore (34) containing a fluted sleeve (48) of resilient material which engages between the bore and the axle.

8. A castor according to any preceding claim further comprising an elastomeric snubbing ring (24) surrounding the pintle and located between the mounting portion (20) and the bearing boss (17).

9. A castor according to any preceding claim, wherein each wheel (30) is retained on its respective axle (13) and with a ratchet cap (21).
